# FASCICULE DE BREVET EUROPEEN

(11) **EP 2 266 279 B1**
(45) Date de publication et mention de la délivrance du brevet: **12.10.2011**
(21) Numéro de dépôt: 09727600.0
(22) Date de dépôt: 16.03.2009
(51) Int. Cl.: H04L 29/06

(54) **PARTAGE DE CONTENU MULTI SUPPORTS A PARTIR D'UNE COMMUNICATION AUDIO-VIDEO**
GEMEINSAME NUTZUNG VON MULTIMEDIA-INHALTEN ÜBER EINE AUDIO-VIDEO-KOMMUNIKATION
MULTIMEDIA CONTENT SHARING VIA AUDIO-VIDEO COMMUNICATION

(30) Priorité: 17.03.2008 FR 0851718
(43) Date de publication de la demande: 29.12.2010
(73) Titulaire: FRANCE TELECOM, 75015 Paris (FR)
(72) Inventeur: ALLAIN, Mickael, F-22700 Louannec (FR)
(74) Mandataire: Delumeau, François Guy
(86) Numéro de dépôt international: PCT/FR2009/050428
(87) Numéro de publication internationale: WO 2009/122078

(56) Documents cités:
- WO-A-03/055193
- WO-A-2006/132573
- GB-A- 2 413 729
- US-A1- 2007 286 162

## Description

### Arrière-plan de l'invention

L'invention se situe dans le domaine des réseaux de télécommunications par lesquels des terminaux peuvent accéder à des services multimédias.

L'invention se situe plus particulièrement dans le contexte de l'offre de services multimédias à des terminaux connectés au réseau par l'intermédiaire d'un point d'accès ou d'une passerelle.

L'invention trouve ainsi une application privilégiée, mais non limitative, pour offrir un service multimédia à un terminal connecté à une passerelle résidentielle dans un réseau domestique ou à un terminal en situation de mobilité relié au réseau Internet par un point d'accès sans fil (réseau Hot Spot).

Dans le contexte de la présente invention, le terme "multimédia" est à comprendre au sens large, un service multimédia désignant notamment les services d'accès à des documents multimédias (images, vidéos, fichiers audionumériques, les services de messageries et, plus généralement, tout service nécessitant un transfert de données numériques entre des terminaux (accès à un serveur Web, transfert de fichiers,...)). Le document WO 03/055 193 A correspond au préambule des revendications 1, 3, 4, 5, 8, 9 et 10.

Dans l'état actuel de la technique, la communication de données numériques entre deux terminaux situés sur des réseaux locaux distincts nécessite un certain nombre de paramétrages de ces terminaux, de tels paramétrages pouvant être compliqués, notamment pour les utilisateurs non spécialistes pour l'établissement d'une connexion.

Par exemple, pour effectuer un transfert de fichiers entre deux ordinateurs connectés à des réseaux locaux différents, il est nécessaire de configurer chacun des ordinateurs avec l'adresse ftp (pour "File Transport Protocol", protocole de transfert de fichiers) et le mot de passe de l'ordinateur distant.

Si les utilisateurs de ces ordinateurs souhaitent, dans un deuxième temps, établir une connexion entre deux autres de leurs terminaux, par exemple pour télécharger un flux vidéo d'un serveur vidéo du premier utilisateur vers la set-top box de l'utilisateur de l'autre réseau, il est nécessaire de configurer chacun de ces terminaux de façon indépendante, la configuration des premiers ordinateurs ne permettant pas de s'affranchir de cette tâche.

### Objet et résumé de l'invention

La présente invention permet d'établir des communications multimédias entre des terminaux appartenant à des réseaux locaux distincts sans présenter les inconvénients de l'art antérieur.

Plus précisément, et selon un premier aspect, l'invention concerne un procédé pouvant être mis en oeuvre par une première passerelle résidentielle pour fournir, à au moins un premier terminal connecté sur cette passerelle, des informations d'accès à au moins un service multimédia offert par au moins un terminal distant connecté à une deuxième passerelle résidentielle, ces passerelles étant reliées par un réseau de télécommunications.

Ce procédé comporte les étapes suivantes :
- établissement d'une session de voix sur IP entre un terminal connecté à la première passerelle et un terminal connecté à la deuxième passerelle ;
- réception, par la première passerelle, des capacités d'au moins un terminal distant connecté à la deuxième passerelle, en utilisant le protocole de signalisation de la session de voix sur IP ;
- détermination, par la première passerelle, d'au moins un service multimédia offert par le terminal distant en fonction des capacités précitées, et
- fourniture, au premier terminal, des informations nécessaires pour établir une session multimédia avec le terminal distant pour accéder au service multimédia précité si les capacités du premier terminal le permettent.

Corrélativement, l'invention concerne une passerelle résidentielle comportant des moyens pour établir une session de voix sur IP entre un terminal connecté sur cette passerelle et un terminal connecté à une deuxième passerelle résidentielle reliée à la première passerelle par un réseau de télécommunications.

Cette passerelle comporte :
- des moyens de réception des capacités d'au moins un terminal distant connecté à la deuxième passerelle, en utilisant le protocole de signalisation de la session de voix sur IP ;
- des moyens pour déterminer au moins un service multimédia offert par le terminal distant en fonction des capacités précitées ; et
- des moyens pour fournir, à au moins un terminal connecté à cette passerelle, les informations nécessaires pour établir une session multimédia avec le terminal distant pour accéder au service multimédia si les capacités de ce terminal le permettent.

Ainsi, et d'une façon générale, l'invention propose de profiter d'une session de voix sur IP établie entre des terminaux de réseaux locaux différents, pour fournir, de façon dynamique et automatique, aux terminaux de l'un de ces réseaux, les informations nécessaires pour établir une ou des sessions multimédias avec les terminaux de l'autre réseau, sans nécessiter de paramétrage de ces terminaux par l'utilisateur et sans qu'il soit nécessaire que ces terminaux ne prennent part à la session voix.

Bien entendu, au moins l'un des terminaux de voix sur IP précités peut être intégré à une passerelle résidentielle elle-même.

Au moins un terminal de voix sur IP peut aussi être un terminal de vidéo sur IP avec un canal réservé à une communication de type voix.

Pour ce faire, une des passerelles envoie, dans le protocole de signalisation de la session de voix sur IP, les capacités ou caractéristiques fonctionnelles des terminaux de son réseau, l'autre passerelle exploitant ces capacités ou caractéristiques fonctionnelles pour proposer aux terminaux de son propre réseau, les services accessibles auprès des terminaux distants.

Dans un mode particulier de réalisation de l'invention, chaque passerelle connaît les capacités des terminaux auxquels elle est connectée et compare ces capacités avec les capacités des terminaux distants reçus dans le protocole de signalisation de la session de voix sur IP, pour s'assurer, avant d'offrir une offre de service à un terminal, qu'il est effectivement en mesure d'accéder à ce service.

Par exemple, si une passerelle résidentielle reçoit l'information qu'un terminal connecté à l'autre passerelle résidentielle offre la fonction de serveur RTSP (pour "Real-Time Streaming Protocol", protocole de streaming en temps réel), elle vérifie, avant d'offrir ce service à un terminal local, que celui-ci possède un client RTSP.

Dans un mode particulier de réalisation, la première passerelle envoie à la deuxième passerelle les capacités d'au moins un terminal auquel elle est connectée en utilisant le protocole de signalisation de la session de voix sur IP.

Ainsi, chacune des passerelles résidentielles communique à l'autre passerelle résidentielle les capacités des terminaux auxquels elle est connectée, de sorte que les sessions peuvent être initiées par les terminaux de l'un ou l'autre réseau.

Selon ce deuxième aspect, l'invention vise aussi un procédé pouvant être mis en oeuvre par une première passerelle résidentielle pour fournir, à au moins un terminal distant connecté à une deuxième passerelle résidentielle, des informations pour établir une session multimédia avec un terminal local connecté à cette première passerelle, ces passerelles étant reliées par un réseau de télécommunications.

Ce procédé comporte les étapes suivantes :
- établissement d'une session de voix sur IP entre un terminal connecté à la première passerelle et un terminal connecté à la deuxième passerelle ;
- envoi, à la deuxième passerelle, de capacités du terminal local représentatives d'un service multimédia pouvant être fourni par ce terminal local, en utilisant le protocole de signalisation de la session de voix sur IP ;
- configuration d'un pare-feu de la première passerelle pour permettre l'établissement d'une connexion initiée par un terminal distant connecté à la deuxième passerelle vers le terminal local, cette configuration prenant en compte des capacités du terminal distant.

Corrélativement, l'invention concerne une passerelle résidentielle comportant des moyens pour établir une session de voix sur IP entre un terminal auquel elle est connectée et un terminal connecté à une deuxième passerelle, ces passerelles étant connectées par un réseau de télécommunication.

Cette passerelle comporte :
- des moyens pour envoyer, à la deuxième passerelle, des capacités d'un terminal local connecté à la première passerelle, ces capacités étant représentatives d'un service multimédia pouvant être fourni par le terminal local, en utilisant le protocole de signalisation de la session de voix sur IP ;
- des moyens pour configurer un pare-feu de la première passerelle pour permettre l'établissement d'une connexion initiée par un terminal distant connecté à la deuxième passerelle vers le terminal local, cette configuration prenant en compte des capacités du terminal distant.

Selon cet aspect, l'invention propose donc de collecter, par une première passerelle, les capacités des terminaux de son réseau local et de transmettre ces capacités à une passerelle distante, via le protocole de signalisation d'une session de voix sur IP en cours, de sorte que cette autre passerelle peut proposer les services associés à ces capacités aux terminaux de son propre réseau local.

L'homme du métier comprendra que le plus souvent l'ouverture d'un port de communication de la passerelle proposant les services sur son réseau local est nécessaire, sans quoi le pare-feu protégeant ce réseau local (en anglais : "firewall") empêcherait l'établissement des sessions initiées par les terminaux de l'autre réseau encore appelés "sessions entrantes".

Dans un mode particulier de réalisation de l'invention, l'ouverture du port de communication d'une passerelle, nécessaire à l'établissement d'une session multimédia avec un terminal connecté à l'autre passerelle, est temporaire.

Par exemple, ce port de communication est maintenu ouvert par une passerelle tant que la session de voix sur IP est active, ou tant qu'une session multimédia établie sur la base des informations échangées via le protocole de signalisation de la session de voix sur IP est active, le port de communication étant fermé dès qu'il n'y a plus de session active entre les deux passerelles.

Dans un mode de réalisation, la configuration pare-feu dépend de règles définies par l'utilisateur, ces règles pouvant par exemple spécifier que le pare-feu autorise des sessions entrantes pendant la durée de la session de voix sur IP, jusqu'à la terminaison de la dernière session établie entre les passerelles, pendant un nombre prédéterminé de sessions.

En tout état de cause, l'invention propose de gérer cette sécurisation de façon transparente pour l'utilisateur.

Dans un mode particulier de mise en oeuvre de l'invention, chaque passerelle communique régulièrement avec les terminaux auxquels elle est connectée pour obtenir les capacités de ces terminaux.

Ainsi, lorsqu'un terminal offrant des services entre ou sort du réseau local, la passerelle de ce réseau peut informer l'autre passerelle de ces changements de services, via le protocole de signalisation voix (session en cours), de sorte que cette autre passerelle peut informer à son tour les terminaux de son propre réseau de ces changements.

Dans un mode particulier de réalisation de l'invention, une passerelle communique avec les terminaux auxquels elle est connectée au moyen du protocole UPnP (Universal Plug and Play).

Dans un mode de réalisation, le protocole de signalisation voix sur IP est le protocole SIP et les capacités des terminaux sont véhiculées dans des messages INVITE (à l'initialisation de la session de voix sur IP) ou RE-INVITE (après l'établissement de la session de voix sur IP).

Grâce à l'invention, et de façon très avantageuse, chaque terminal d'un réseau local peut présenter à l'utilisateur les services offerts par les terminaux du réseau distant, de façon dynamique, et sans aucune configuration de l'utilisateur.

Par exemple, pour les terminaux équipés d'un écran, une fenêtre intruse (en anglais "pop up") peut proposer l'activation d'un service à l'utilisateur. Si l'utilisateur décide d'activer ce service, une session multimédia est établie entre le terminal de l'utilisateur et le terminal du réseau distant offrant ce service, tant que le port correspondant est ouvert sur la passerelle distante.

Selon un troisième aspect, l'invention vise un système de communication permettant d'établir une session multimédia entre deux terminaux, chacun étant connecté à une passerelle résidentielle, ces passerelles étant reliées entre elles par un réseau de télécommunications.

Dans ce système :
- au moins une première de ces passerelles communique à la deuxième de ces passerelles, via le protocole de signalisation d'une session de voix sur IP établie entre des terminaux connectés à ces passerelles, des capacités d'au moins un premier terminal connecté à la première passerelle ;
- la deuxième passerelle détermine au moins un service multimédia offert par le premier terminal, en fonction des capacités précitées ; et
- la deuxième passerelle fournit à au moins un deuxième terminal auquel elle est connectée, des informations nécessaires pour établir une session multimédia avec le premier terminal pour accéder au service multimédia, si les capacités du deuxième terminal le permettent.

Dans un mode particulier de réalisation, les différentes étapes des procédés mentionnés ci-dessus sont déterminées par des instructions de programmes d'ordinateurs.

En conséquence, l'invention vise aussi un programme d'ordinateur sur un support d'informations, ce programme étant susceptible d'être mis en oeuvre dans une passerelle ou plus généralement dans un ordinateur, ce programme comportant des instructions adaptées à la mise en oeuvre des étapes d'au moins un procédé mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins et aux annexes qui en illustrent un exemple de réalisation dépourvu de tout caractère limitatif, et dans lesquels :
- la figure 1 représente, de façon schématique, un système de communications dans lequel la présente invention peut être mise en oeuvre, dans un mode particulier de réalisation ;
- la figure 2 représente, de façon schématique, l'architecture matérielle d'une passerelle conforme à l'invention ;
- la figure 3 représente le système de la figure 1 après mise en oeuvre de l'invention ;
- la figure 4 représente, de façon schématique, les principales étapes des procédés conformes à l'invention, dans un mode particulier de réalisation ; et
- les annexes 1 à 4 représentent des structures de données pouvant être utilisées dans des passerelles conformes à l'invention, dans un mode particulier de réalisation.

### Description détaillée d'un mode de réalisation

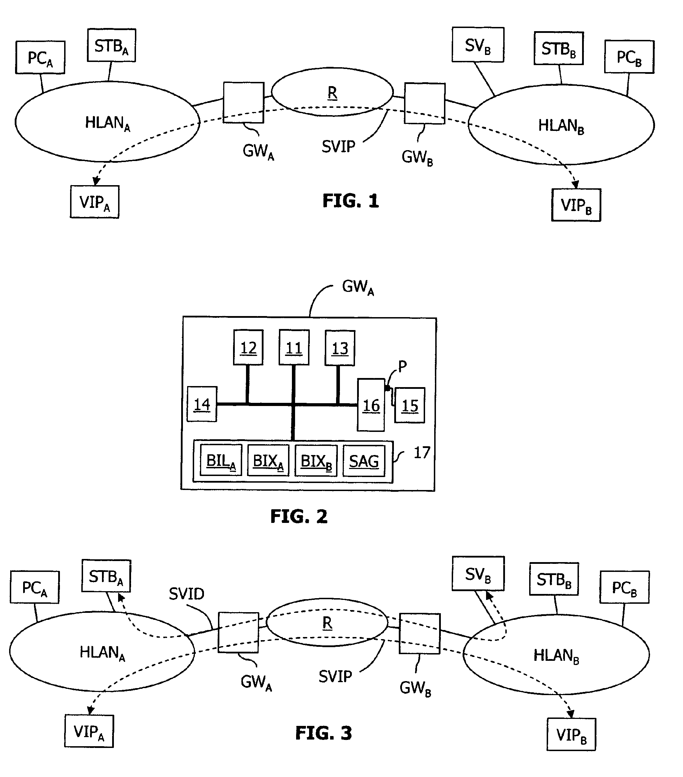

La **figure 1** représente un système de communications conforme à l'invention dans un mode particulier de réalisation.

Dans cet exemple, on considère deux réseaux domestiques HLAN_{A} et HLAN_{B} interconnectés par des passerelles résidentielles GW_{A} et GW_{B} reliées entre elles par un réseau de télécommunications R.

Dans l'exemple de réalisation décrit ici, le réseau R est le réseau Internet.

Nous considérerons dans cet exemple que trois terminaux sont connectés au réseau local domestique HLAN_{A}, à savoir :
- un ordinateur personnel PC_{A} ;
- une set top box STB_{A} ; et
- un terminal de voix sur IP VIP_{A}.

Nous considérerons également que quatre terminaux sont connectés au réseau local résidentiel HLAN_{B}, à savoir :
- un serveur vidéo SV_{B} ;
- une set top box STB_{B} ;
- un ordinateur personnel PC_{B} ; et
- un terminal de voix sur IP VIP_{B}.

On notera que les terminaux connectés aux réseaux locaux résidentiels selon l'invention peuvent être des équipements fixes ou mobiles.

Nous supposerons également qu'une session de voix sur IP SVIP, matérialisée par une double flèche tiretée, est établie entre les terminaux de voix sur IP VIP_{A} et VIP_{B} par l'intermédiaire des passerelles domestiques GW_{A} et GW_{B}.

A la **figure 2**, on a représenté une passerelle domestique GW_{A} conforme à l'invention dans un mode particulier de réalisation. Dans cet exemple, la passerelle GW_{B} est identique.

Dans l'exemple décrit ici, cette passerelle GW_{A} a l'architecture matérielle d'un ordinateur. Elle comporte notamment un processeur 11, une mémoire vive de type RAM 12 et une mémoire morte de type ROM 13, des moyens de communication 14 avec les terminaux du réseau local HLAN_{A} et des moyens de communication 15, protégés par un pare-feu 16, avec le réseau Internet R.

Dans l'exemple décrit ici, la passerelle résidentielle GW_{A} comporte une mémoire non volatile réinscriptible de type flash 17 dans laquelle sont stockées des structures de données qui seront décrites ultérieurement en référence aux annexes.

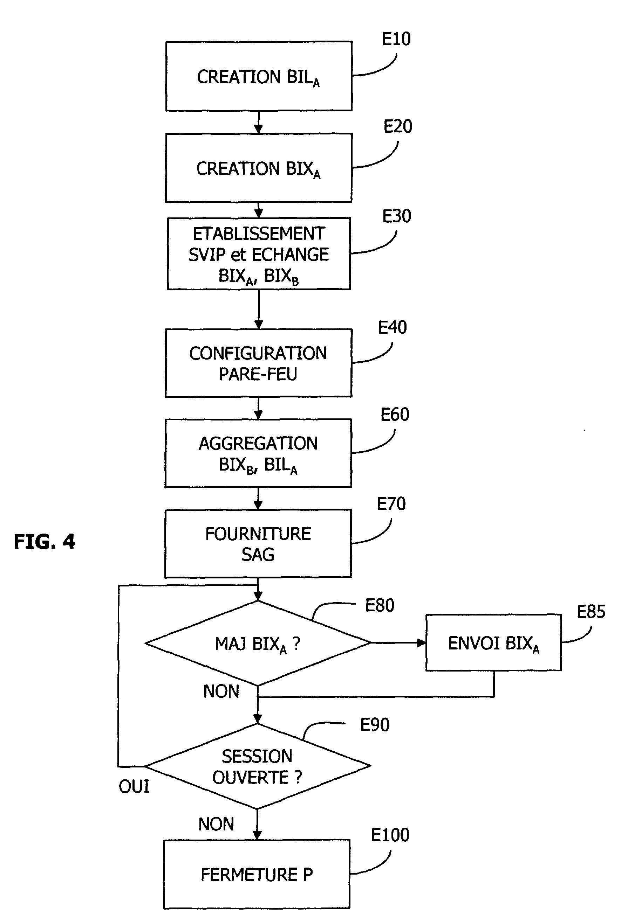

La mémoire morte 13 constitue un support d'enregistrement conforme à l'invention sur lequel est enregistré un programme d'ordinateur conforme à l'invention, ce programme comprenant des instructions pour exécuter les étapes des procédés selon l'invention, ces étapes étant représentées sous forme d'organigramme à la figure 4.

Conformément à l'invention, chacune des passerelles GW_{A}, GW_{B} est apte à recueillir les capacités des équipements de son réseau local HLAN_{A}, HLAN_{B}.

Dans l'exemple de réalisation décrit ici, ces capacités sont stockées dans une structure de données BIL_{A} locale à la passerelle GW_{A} mémorisée dans la mémoire non volatile réinscriptible 17.

Un exemple de structure locale BIL_{A} est donné à l'annexe 1.

Dans l'exemple décrit ici, cette structure comporte un champ "poids de sécurisation" qui définit le niveau d'intégrités des informations qui sont échangées.

Par exemple, plus le poids est important, plus le niveau de sécurisation est élevé. Ainsi, dans un mode de réalisation :
- un poids nul signifie que toutes les sessions initiées par les terminaux distants sont acceptées ;
- un poids maximal interdit toute tentative de connexion ; et
- un poids intermédiaire interdit seulement certaines des sessions initiées par les terminaux distants en fonction des capacités de ces terminaux.

En tout état de cause, la configuration du pare-feu est automatique et effectuée sur la base des capacités des terminaux distants.

Dans l'exemple de réalisation décrit ici, le poids de sécurisation a la valeur "NULL" ce qui signifie que les règles du pare-feu de la passerelle résidentielle GW_{A} sont appliquées en fonction des capacités des terminaux distants, sans restriction supplémentaire.

Dans l'exemple de réalisation décrit ici, la structure BIL_{A} recense les capacités des terminaux PC_{A} et STB_{A} du réseau local HLAN_{A}.

Plus précisément, ce fichier doit être interprété de la façon suivante :
- capacité, par l'ordinateur personnel PC_{A}, de mettre en oeuvre un service de messagerie, l'adresse e-mail de l'utilisateur de cet ordinateur étant pierre.martin@orange.-fr.
- capacité, par l'ordinateur personnel PC_{A}, de mettre en oeuvre un service de transfert de fichiers, l'adresse de cet ordinateur dans le réseau local HLAN_{A} étant l'adresse IP 168.1.1.12, login et mot de passe : "anonymous" ;
- capacité, par la machine STB_{A}, de mettre en oeuvre un service de set top box, l'adresse de cette set top box dans le réseau local HLAN_{A} étant l'adresse IP 168.1.1.15, login "STB", pas de mot de passe ; et
- capacité, par l'ordinateur personnel PC_{A}, d'offrir un service de serveur Web, l'adresse IP de ce serveur Web dans le réseau local HLAN_{A} étant l'adresse IP 168.1.1.20, ce serveur Web pouvant être accédé par l'URL http://168.1.1.20/photos.

Conformément à l'invention, les capacités du réseau local HLAN_{A} doivent être communiquées à la passerelle distante GW_{B} par le protocole de signalisation de la session SVIP de voix sur IP.

Or, comme de façon connue, les machines PC_{A} et STB_{A} ne peuvent être accédées, du réseau HLAN_{B}, aux adresses IP mentionnées dans la structure BIL_{A}, ces adresses étant propres à HLAN_{A}.

Aussi, la passerelle GW_{A} crée, à partir de la base d'informations locales BIL_{A}, une structure d'échange BIX_{A} exploitable par les terminaux du réseau local HLAN_{B}.

Cette structure BIX_{A} est donnée à l'annexe 2.

Elle est obtenue, en substituant dans la structure locale BIL_{A} chacune des adresses IP des terminaux du réseau HLAN_{A} par l'adresse IP de la passerelle GW_{A} sur le réseau Internet R. Cette méthode de substitution d'adresse (en anglais "NAT") est connue de l'homme du métier.

A l'annexe 3, on a donné la structure d'échange BIX_{B} équivalente obtenue par la passerelle GW_{B} du réseau HLAN_{B}.

Dans l'exemple décrit ici, on comprendra que la passerelle GW_{B} offre, aux terminaux du réseau local HLAN_{A}, un service de transfert de fichiers auprès de l'ordinateur personnel PC_{B}, et un service de serveur RTSP auprès du serveur vidéo SV_{B}.

Conformément au mode de réalisation de l'invention décrit ici, les passerelles GW_{A} et GW_{B} s'échangent les structures d'échange BIX_{A} et BIX_{B} dans le protocole de signalisation de la session SVIP de voix sur IP.

Ces structures BIX_{A}, BIX_{B} peuvent en particulier être échangées par les passerelles dans des champs du message INVITE à l'initialisation de la session de voix sur IP.

Ces structures BIX_{A}, BIX_{B} peuvent également être échangées par les passerelles dans les champs d'un message de type RE-INVITE en cours de session de voix sur IP.

Nous nous plaçons maintenant du côté de la passerelle GW_{A} qui reçoit la structure d'échange BIX_{B} envoyée par la passerelle GW_{B}.

Conformément à l'invention, la passerelle GW_{A} détermine les services offerts par les terminaux du réseau HLAN_{B} à partir de la structure BIX_{B}.

Dans l'exemple décrit ici, elle détermine que les terminaux du réseau HLAN_{B} offrent un service de transfert de fichiers et un service de serveur RTSP.

Puis, la passerelle GW_{A} détermine quels sont les terminaux de son réseau HLAN_{A} ayant des capacités pour accéder aux services offerts par les terminaux du réseau HLAN_{B}.

Pour cette détermination, la passerelle GW_{A} compare la structure d'échange BIX_{B} reçue de la passerelle GW_{B} avec sa structure locale BIL_{A}.

La passerelle GW_{A} construit ensuite une structure d'agrégation de données SAG destinée aux terminaux de son propre réseau HLAN_{A}.

En référence à l'annexe 4, on comprend que cette structure permet d'offrir à l'ordinateur personnel PC_{A} un service de messagerie vers l'adresse martin.dupont@orange-fr de l'ordinateur personnel PC_{B} et un service de transfert de fichiers, à l'adresse IP 200.20.156.12 de la passerelle GW_{B}.

Dans l'exemple décrit ici, le poids de sécurisation est fixé à la valeur "NULL", ce qui signifie que ces deux services sont offerts à l'ordinateur PC_{A} sans demande de contrôle d'intégrité les données du réseau HLAN_{B}.

On remarquera que, de façon très avantageuse, les informations de login "mdd" et de mot de passe "martin" sont contenues dans la structure d'agrégation, si bien que l'ordinateur PC_{A} peut être configuré automatiquement sans intervention de l'utilisateur.

De même, la structure d'agrégation SAG offre, à la set top box STB_{A}, un service de serveur RTSP, auprès du serveur vidéo SV_{B} du réseau HLAN_{B} et les informations nécessaires pour configurer automatiquement la set top box STB_{A}, à savoir l'adresse IP de ce serveur et les informations de login et de mot de passe.

Dans l'exemple de réalisation décrit ici, chacun des équipements PC_{A}, STB_{A} du réseau local HLAN_{A} se configure automatiquement sur réception de la structure d'agrégation SAG.

Dans l'exemple décrit ici, un écran de télévision, non représenté, est connecté à la set top box STB_{A} et présente à l'utilisateur le service vidéo offert par le terminal SV_{B} du réseau HLAN_{B}.

De façon très avantageuse, l'utilisateur peut accéder à ce service par un simple clic de sa télécommande, sans aucune configuration de sa set top box.

Lorsqu'il accède à ce service, une session multimédia, référencée SVID et représentée par une double flèche tiretée, est établie, via les passerelles et le réseau Internet R, entre la set top box STB_{A} et le serveur vidéo SV_{B}, comme représenté sur la **figure 3****.**

Dans l'exemple décrit ici, cette session est établie en parallèle de la session de voix sur IP SVIP toujours active.

Bien entendu, la session multimédia SVID n'est possible que parce que la passerelle distante GW_{B} configure son pare-feu pour ouvrir un port P correspondant au protocole RTSP permettant l'établissement d'une connexion entrante.

En référence à la **figure 4**, nous allons maintenant décrire les principales étapes des procédés conformes à l'invention, mis en oeuvre par la passerelle GW_{A} dans cet exemple de réalisation.

Au cours d'une étape E10, la passerelle résidentielle GW_{A} crée la structure locale BIL_{A} de l'annexe 1, dans laquelle elle mémorise les capacités des terminaux connectés au réseau HLAN_{A}.

Dans l'exemple de réalisation décrit ici, la passerelle GW_{A} communique avec les terminaux de son réseau en utilisant le protocole UPnP.

Puis, à l'étape E20, la passerelle résidentielle GW_{A} crée la structure d'échange BIX_{A} utilisable par les terminaux du réseau local HLAN_{B}, en mettant en oeuvre un mécanisme de traduction d'adresses.

Puis, au cours d'une étape E30, une session de voix sur IP SVIP est établie entre les terminaux VIP_{A} et VIP_{B} des réseaux domestiques HLAN_{A} et HLAN_{B} via les passerelles résidentielles GW_{A} et GW_{B}, et les passerelles échangent leurs structures BIX_{A}, BIX_{B} dans un message INVITE du protocole SIP de signalisation de cette session.

Puis, au cours d'une étape E40, la passerelle résidentielle GW_{A} configure son pare-feu pour permettre aux terminaux du réseau local HLAN_{B} d'initier des sessions multimédias avec les terminaux de son propre réseau HLAN_{A}.

Au cours d'une étape E60, la passerelle résidentielle GW_{A} détermine quels sont les terminaux de son réseau HLAN_{A} qui ont les capacités pour bénéficier des services offerts par les terminaux du réseau HLAN_{B}.

Au cours de cette étape E60, la passerelle résidentielle GW_{A} crée la structure de données SAG de l'annexe 4.

Puis, au cours d'une étape E70, la passerelle résidentielle GW_{A} communique cette structure SAG aux terminaux concernés, à savoir à l'ordinateur personnel PC_{A} et à la set top box STB_{A}.

Dans l'exemple de réalisation décrit ici, la passerelle GW_{A} détermine, au cours d'un test E80, si les services offerts par les terminaux de son propre réseau ont changé, ce qui pourrait se produire notamment lorsqu'un terminal entre ou sort du réseau local HLAN_{A}.

Si tel est le cas, la passerelle GW_{A} envoie (étape E85) une structure d'échange BIX_{A} mise à jour dans un message RE-INVITE du protocole de signalisation de la session de voix sur IP SVIP à la passerelle GW_{B}.

Sinon, la passerelle résidentielle GW_{A} vérifie ou détecte, au cours d'un test E90, s'il existe toujours une session ouverte entre les deux passerelles, cette session pouvant être, dans cet exemple, soit la session de voix sur IP SVIP, soit une session multimédia établie entre deux terminaux des réseaux locaux HLAN_{A} et HLAN_{B}.

Si une session est toujours ouverte, le résultat du test E90 est positif, et la passerelle résidentielle GW_{A} retourne au test E80 déjà décrit.

Dans l'exemple décrit ici, s'il est déterminé au test E90 qu'il n'y a plus de session ouverte entre les deux passerelles, GW_{A}, GW_{B}, la passerelle GW_{A} ferme son port P pour sécuriser son réseau HLAN_{A}.

L'invention permet ainsi de profiter d'une communication audio ou vidéo établie entre plusieurs utilisateurs (par exemple une communication VoIP) pour échanger des données (par exemple les dernières photos de vacances de l'un des utilisateurs) à partir de n'importe quel support multimédia disponible dans le réseau local de l'un des utilisateurs et ce, de façon dynamique et automatisée.

L'échange de données se fait par la création automatique d'un canal de communication, en parallèle de la communication audio ou vidéo.

### ANNEXE 1 : BIL_{A}

```
 Struct base info locale {
 Poids de sécurisation : voix
 Messagerie {
    Nom machine : PCA
    Adresse Email : pierre.martin@orange.fr}
 Transfert de fichier {
    Nom machine : PCA
    @IP : 168.1.1.12
    Login : anonymous
    Passwd : anonymous}
 Set-top box{
    Nom machine : STBA
    @IP : 168.1.1.15
    Login : stb
    Passwd : none}
 Serveur WEB
    Nom machine : PCA
    @IP :168.1.1.20
    URL : http://168.1.1.20/photos}
 .......
 }
```

### ANNEXE 2 : BIX_{A}

```
 Struct base info d'échange{
 Adresse Email : pierre.martin@orange.fr
 Transfert de fichier {
    Nom machine : GWA
    @IP : 192.167.25.1
    Login : anonymous
    Passwd : anonymous}
 Set-top box{
    Nom machine : GWA
    @IP : 192.167.25.1
    Login : stb
    Passwd : none}
 Serveur WEB
    Nom machine : GWA
    @IP : 192.167.25.1
    URL : http://192.167.25.1/photos}
 .......
 }
```

### ANNEXE 3 : BIX_{B}

```
 Struct base info d'échange du distant {
 Adresse Email : .martin.dupond@orange.fr
 Transfert de fichier {
    Nom machine : GWB
    @IP : 200.20.156.12
    Login : mdd
    Passwd : martin}
 Serveur RTSP{
    Nom machine : GWB
    @IP : 200.20.156.12
    Login : video
    Passwd : Martin}
 }
```

### ANNEXE 4 : SAG

```
 Struct agrégation {
 Destinataire PCA {
      Poids de sécurisation : NULL
      AdresseEmail : .martin.dupond@orange.fr
      Transfert de fichier {
          @IP : 200.20.156.12
          Login : mdd
          Passwd : martin}
      }
 Destinataire STBA{
       Serveur RTSP{
          @IP : 200.20.156.12
          Login : video
          Passwd : Martin}
       }
 }
```

## Revendications

1. Procédé pouvant être mis en oeuvre par une première passerelle résidentielle (GW_{A}), pour fournir, à au moins un premier terminal (PC_{A}, STB_{A}) connecté sur cette passerelle (GW_{A}) des informations d'accès à au moins un service multimédia offert par au moins un terminal distant (PC_{B}, SV_{B}) connecté à une deuxième passerelle résidentielle (GW_{B}), lesdites passerelles (GW_{A}, GW_{B}) étant reliées par un réseau de télécommunications (R), ce procédé comportant les étapes suivantes :
- établissement (E30) d'une session de voix sur IP (SVIP) entre un terminal (VIP_{A}) connecté à ladite première passerelle (GW_{A}) et un terminal (VIP_{B}) connecté à ladite deuxième passerelle (GW_{B});
- réception (E30), par ladite première passerelle (GW_{A}), des capacités d'au moins un terminal distant (PC_{B}, SV_{B}) connecté à ladite deuxième passerelle (GW_{B}), en utilisant le protocole de signalisation de ladite session de voix sur IP (SVIP); le procédé étant **caractérisé en ce qu'**il comprend aussi les étapes suivantes
- détermination (E60), par ladite première passerelle (GW_{A}), d'au moins un service multimédia offert par ledit terminal distant (PC_{B}, SV_{B}), en fonction desdites capacités ;
- fourniture (E70), audit premier terminal (PC_{A}, STB_{A}), des informations nécessaires pour établir une session multimédia (SVID) avec ledit terminal distant (PC_{B}, SV_{B}) pour accéder audit service multimédia, si les capacités dudit premier terminal, le permettent.

2. Procédé selon la revendication 1, **caractérisé en ce que** ladite première passerelle (GW_{A}) envoie, à ladite deuxième passerelle (GW_{B}), des capacités d'au moins un terminal (PC_{A}, STB_{A}) auquel elle est connectée, en utilisant le protocole de signalisation de ladite session de voix sur IP (SVIP).

3. Passerelle résidentielle (GW_{A}) comportant des moyens (15) pour établir une session de voix sur IP (SVIP) entre un terminal (VIP_{A}) auquel elle est connectée et un terminal (VIP_{B}) connecté à une deuxième passerelle (GW_{B}) reliée à ladite première passerelle (GW_{A}) par un réseau de télécommunications (R), ladite passerelle (GW_{A}) comportant :
- des moyens (15) de réception des capacités d'au moins un terminal distant (PC_{B}, SV_{B}) connecté à ladite deuxième passerelle (GW_{B}), en utilisant le protocole de signalisation de ladite session de voix sur IP (SVIP); la dite passerelle étant **caractérisée en ce qu'**elle comprend:
- des moyens (11) pour déterminer au moins un service multimédia offert par ledit terminal distant (PC_{B}, SV_{B}), en fonction desdites capacités ;
- des moyens (11, 14) pour fournir à au moins un terminal (PC_{A}, STB_{A}) auquel elle est connectée, des informations nécessaires pour établir une session multimédia (SVID) avec ledit terminal distant (PC_{B}, SV_{B}) pour accéder audit service multimédia, si les capacités de ce terminal (PC_{A}, STB_{A}) le permettent.

4. Programme d'ordinateur comportant des instructions pour l'exécution des étapes du procédé selon la revendication 1 lorsque ledit programme est exécuté par un ordinateur (GW_{A}).

5. Procédé pouvant être mis en oeuvre par une première passerelle résidentielle (GW_{A}), pour fournir, à au moins un terminal distant (PC_{B}, SV_{B}) connecté à une deuxième passerelle résidentielle (GW_{B}), des informations pour établir une session multimédia (SVID) avec un terminal local (PC_{A}, STB_{A}) connecté à ladite première passerelle (GW_{A}), lesdites passerelles (GW_{A}, GW_{B}) étant reliées par un réseau de télécommunications (R), ce procédé comportant les étapes suivantes :
- établissement (E30) d'une session de voix sur IP (SVIP) entre un terminal (VIP_{A}) connecté à ladite première passerelle (GW_{A}) et un terminal (VIP_{B}) connecté à ladite deuxième passerelle (GW_{B}) ; le procédé étant **caractérisé en ce qu'**il comporte aussi les étapes suivantes
- envoi (E30), à ladite deuxième passerelle (GW_{B}), de capacités dudit terminal local (PC_{A}, STB_{A}) représentatives d'un service multimédia pouvant être fourni par ledit terminal local, en utilisant le protocole de signalisation de ladite session de voix sur IP (SVIP) ;
- configuration (E40) d'un pare-feu de ladite première passerelle (GW_{A}) pour permettre l'établissement d'une connexion initiée par un terminal distant (PC_{B}, SV_{B}) connecté à ladite deuxième passerelle (GW_{B}) vers ledit terminal local (PC_{A}, STP_{A}), ladite configuration prenant en compte des capacités dudit terminal distant (PC_{B},SV_{B}).

6. Procédé selon la revendication 5, **caractérisé en ce que** ladite première passerelle (GW_{A}) maintient ledit port de communication ouvert tant que ladite session de voix sur IP (SVIP), ou au moins une desdites sessions multimédias (SVID) est active.

7. Procédé selon la revendication 5, **caractérisé en ce que** ladite première passerelle (GW_{A}) reçoit, de ladite deuxième passerelle(GW_{B}), des capacités d'au moins un terminal (PC_{B}, SV_{B}) connecté à ladite deuxième passerelle (GW_{B}), en utilisant le protocole de signalisation de ladite session de voix sur IP (SVIP).

8. Passerelle résidentielle (GW_{A}) comportant des moyens (15) pour établir une session de voix sur IP (SVIP) entre un terminal (VIP_{A}) auquel elle est connectée et un terminal (VIP_{B}) connecté à une deuxième passerelle (GW_{B}) reliée à ladite première passerelle (GW_{A}) par un réseau de télécommunications (R), ladite passerelle (GW_{A}) étant **caractérisée en ce qu'**elle comporte :
- des moyens (15) pour envoyer, à ladite deuxième passerelle (GW_{B}), des capacités d'un terminal local (PC_{A}, STB_{A}) connecté à ladite première passerelle, ces capacités étant représentatives d'un service multimédia pouvant être fourni par ledit terminal local, en utilisant le protocole de signalisation de ladite session de voix sur IP (SVIP) ;
- des moyens (11) pour configurer un pare-feu de ladite première passerelle (GW_{A}) pour permettre l'établissement d'une connexion initiée par un terminal distant (PC_{B}, SV_{B}) connecté à ladite deuxième passerelle (GW_{B}) vers ledit terminal local (PC_{A}, STB_{A}), la configuration prenant en compte des capacités dudit terminal distant (PC_{B}, SV_{B}).

9. Programme d'ordinateur comportant des instructions pour l'exécution des étapes du procédé selon la revendication 5 lorsque ledit programme est exécuté par un ordinateur (GW_{A}).

10. Système de communication permettant d'établir une session multimédia entre deux terminaux (STB_{A}, SV_{B}), chacun étant connecté à une passerelle résidentielle (GW_{A}, GW_{B}), le système de communication comportant lesdites passerelles résidentielles lesdites passerelles résidentielles étant adaptées pour être reliées entre elles par un réseau de télécommunications (R), lesdites passerelles résidentielles étant adaptées pour que :
- au moins une première desdites passerelles (GW_{B}) communique à la deuxième desdites passerelles, via le protocole de signalisation d'une session de voix sur IP (SVIP) établie entre des terminaux (VIP_{A}, VIP_{B}) connectés à ces passerelles (GW_{A}, GW_{B}), des capacités d'au moins un premier terminal (SV_{B}) connecté à ladite première passerelle (GW_{B}); le système de communication étant **caractérisé en ce que** lesdites passerelles résidentielles sont également adaptées pour que:
- ladite deuxième passerelle (GW_{A}) détermine au moins un service multimédia offert par ledit premier terminal (SV_{B}), en fonction desdites capacités ; et
- ladite deuxième passerelle (GW_{A}) fournit à au moins un deuxième terminal (STB_{A}) auquel elle est connectée, des informations nécessaires pour établir une session multimédia (SVID) avec ledit premier terminal (SV_{B}) pour accéder audit service multimédia, si les capacités dudit deuxième terminal (STB_{A}) le permettent.

## Claims

1. Method able to be implemented by a first residential gateway (GW_{A}), in order to provide, to at least one first terminal (PC_{A}, STB_{A}) connected to this gateway (GW_{A}), information regarding access to at least one multimedia service offered by at least one remote terminal (PC_{B}, SV_{B}) connected to a second residential gateway (GW_{B}), said gateways (GW_{A}, GW_{B}) being linked by a telecommunications network (R), this method comprising the following steps:
- establishment (E30) of a Voice over IP session (SVIP) between a terminal (VIP_{A}) connected to said first gateway (GW_{A}) and a terminal (VIP_{B}) connected to said second gateway (GW_{B});
- reception (E30), by said first gateway (GW_{A}), of the capabilities of at least one remote terminal (PC_{B}, SV_{B}) connected to said second gateway (GW_{B}), by using the signalling protocol of said Voice over IP session (SVIP);
the method being **characterized in that** it also includes the following steps:
- determination (E60), by said first gateway (GW_{A}), of at least one multimedia service offered by said remote terminal (PC_{B}, SV_{B}), as a function of said capabilities;
- provision (E70), to said first terminal (PC_{A}, STB_{A}), of the information required in order to establish a multimedia session (SVID) with said remote terminal (PC_{B}, SV_{B}) in order to access said multimedia service, if the capabilities of said first terminal so allow.

2. Method according to Claim 1, **characterized in that** said first gateway (GW_{A}) dispatches, to said second gateway (GW_{B}), capabilities of at least one terminal (PC_{A}, STB_{A}) to which it is connected, by using the signalling protocol of said Voice over IP session (SVIP).

3. Residential gateway (GW_{A}) comprising means (15) for establishing a Voice over IP session (SVIP) between a terminal (VIP) to which it is connected and a terminal (VIP_{B}) connected to a second gateway (GW_{B}) linked to said first gateway (GW_{A}) by a telecommunications network (R), said gateway (GW_{A}) comprising:
- means (15) for receiving the capabilities of at least one remote terminal (PC_{B}, SV_{B}) connected to said second gateway (GW_{B}), by using the signalling protocol of said Voice over IP session (SVIP);
said gateway being **characterized in that** it includes:
- means (11) for determining at least one multimedia service offered by said remote terminal (PC_{B}, SV_{B}), as a function of said capabilities;
- means (11, 14) four providing, to at least one terminal (PC_{A}, STB_{A}) to which it is connected, information required in order to establish a multimedia session (SVID) with said remote terminal (PC_{B}, SV_{B}) in order to access said multimedia service, if the capabilities of this terminal (PC_{A}, STB_{A}) so allow.

4. Computer program comprising instructions for the execution of the steps of the method according to Claim 1 when said program is executed by a computer (GW_{A}).

5. Method able to be implemented by a first residential gateway (GW_{A}), in order to provide, to at least one remote terminal (PC_{B}, SV_{B}) connected to a second residential gateway (GW_{B}), information for establishing a multimedia session (SVID) with a local terminal (PC_{A}, STB_{A}) connected to said first gateway (GW_{A}), said gateways (GW_{A}, GW_{B}) being linked by a telecommunications network (R), this method comprising the following steps:
- establishment (E30) of a Voice over IP session (SVIP) between a terminal (VIP_{A}) connected to said first gateway (GW_{A}) and a terminal (VIP_{B}) connected to said second gateway (GW_{B});
the method being **characterized in that** it also includes the following steps:
- dispatching (E30), to said second gateway (GW_{B}), of capabilities of said local terminal (PC_{A}, STB_{A}) that are representative of a multimedia service able to be provided by said local terminal, by using the signalling protocol of said Voice over IP session (SVIP);
- configuration (E40) of a firewall of said first gateway (GW_{A}) so as to allow the establishment of a connection initiated by a remote terminal (PC_{B}, SV_{B}) connected to said second gateway (GW_{B}) towards said local terminal (PC_{A}, STP_{A}), said configuration taking into account capabilities of said remote terminal (PC_{B}, SV_{B}) .

6. Method according to Claim 5, **characterized in that** said first gateway (GW_{A}) keeps said communication port open as long as said Voice over IP session (SVIP), or at least one of said multimedia sessions (SVID), is active.

7. Method according to Claim 5, **characterized in that** said first gateway (GW_{A}) receives, from said second gateway (GW_{B}) capabilities of at least one terminal (PC_{B}, SV_{B}) connected to said second gateway (GW_{B}), by using the signalling protocol of said Voice over IP session (SVIP).

8. Residential gateway (GW_{A}) comprising means (15) for establishing a Voice over IP session (SVIP) between a terminal (VIP_{A}) to which it is connected and a terminal (VIP_{B}) connected to a second gateway (GW_{B}) linked to said first gateway (GW_{A}) by a telecommunications network (R), said gateway (GW_{A}) being **characterized in that** it comprises:
- means (15) for dispatching, to said second gateway (GW_{B}), capabilities of a local terminal (PC_{A}, STB_{A}) connected to said first gateway, these capabilities being representative of a multimedia service able to be provided by said local terminal, by using the signalling protocol of said Voice over IP session (SVIP);
- means (11) for configuring a firewall of said first gateway (GW_{A}) so as to allow the establishment of a connection initiated by a remote terminal (PC_{B}, SV_{B}) connected to said second gateway (GW_{B}) towards said local terminal (PC_{A}, STB_{A}), the configuration taking into account capabilities of said remote terminal (PC_{B}, SV_{B}).

9. Computer program comprising instructions for the execution of the steps of the method according to Claim 5 when said program is executed by a computer (GW_{A}).

10. Communication system making it possible to establish a multimedia session between two terminals (STB_{A}, SV_{B}), each being connected to a residential gateway (GW_{A}, GW_{B}), the communication system comprising said residential gateways, said residential gateways being adapted so as to be linked together by a telecommunications network (R), said residential gateways being adapted so that:
- at least one first of said gateways (GW_{B}) communicates to the second of said gateways, via the signalling protocol of a Voice over IP session (SVIP) established between terminals (VIP_{A,} VIP_{B}) connected to these gateways (GW_{A}, GW_{B}), capabilities of at least one first terminal (SV_{B}) connected to said first gateway (GW_{B}); the communication system being **characterized in that** said residential gateways are also adapted so that:
- said second gateway (GW_{A}) determines at least one multimedia service offered by said first terminal (SV_{B}), as a function of said capabilities; and
- said second gateway (GW_{A}) provides to at least one second terminal (SIB_{A}) to which it is connected, information required in order to establish a multimedia session (SVID) with said first terminal (SV_{B}) in order to access said multimedia service, if the capabilities of said second terminal (STB_{A}) so allow.

## Patentansprüche

1. Verfahren, das von einem ersten privaten Gateway (GW_{A}) durchgeführt werden kann, um an mindestens ein erstes mit diesem Gateway (GW_{A}) verbundenes Endgerät (PC_{A}, STB_{A}) Zugangsinformationen zu mindestens einem Multimedia-Dienst zu liefern, der von mindestens einem mit einem zweiten privaten Gateway (GW_{B}) verbundenen fernen Endgerät (PC_{B}, SV_{B}) angeboten wird, wobei die Gateways (GW_{A}, GW_{B}) über ein Telekommunikationsnetz (R) verbunden sind, wobei dieses Verfahren die folgenden Schritte aufweist:
- Aufbau (E30) einer Voice-over-IP-Sitzung (SVIP) zwischen einem mit dem ersten Gateway (GW_{A}) verbundenen Endgerät (VIP_{A}) und einem mit dem zweiten Gateway (GW_{B}) verbundenen Endgerät (VIP_{B}) ;
- Empfang (E30), durch das erste Gateway (GW_{A}), der Kapazitäten mindestens eines mit dem zweiten Gateway (GW_{B}) verbundenen fernen Endgeräts (PC_{B}, SV_{B}) unter Verwendung des Signalisierungsprotokolls der Voice-over-IP-Sitzung (SVIP),
wobei das Verfahren **dadurch gekennzeichnet ist, dass** es auch die folgenden Schritte enthält:
- Bestimmung (E60), durch das erste Gateway (GW_{A}), mindestens eines vom fernen Endgerät (PC_{B}, SV_{B}) angebotenen Multimedia-Diensts abhängig von den Kapazitäten;
- Liefern (E70) der für den Aufbau einer Multimedia-Sitzung (SVID) mit dem fernen Endgerät (PC_{B}, SV_{B}) für den Zugriff auf den Multimedia-Dienst notwendigen Informationen an das erste Endgerät (PC_{A}, STB_{A}), wenn die Kapazitäten des ersten Endgeräts es erlauben.

2. Verfahren nach Anspruch 1, **dadurch gekennzeichnet, dass** das erste Gateway (GW_{A}) an das zweite Gateway (GW_{B}) Kapazitäten mindestens eines Endgeräts (PC_{A}, STB_{A}), mit dem es verbunden ist, sendet, indem es das Signalisierungsprotokoll der Voice-over-IP-Sitzung (SVIP) verwendet.

3. Privates Gateway (GW_{A}), das Einrichtungen (15) aufweist, um eine Voice-over-IP-Sitzung (SVIP) zwischen einem Endgerät (VIP_{A}), mit dem es verbunden ist, und einem Endgerät (VIP_{B}) aufzubauen, das mit einem zweiten Gateway (GW_{B}) verbunden ist, welches mit dem ersten Gateway (GW_{A}) über ein Telekommunikationsnetz (R) verbunden ist, wobei das Gateway (GW_{A}) aufweist:
- Einrichtungen (15) zum Empfang der Kapazitäten mindestens eines mit dem zweiten Gateway (GW_{B}) verbundenen fernen Endgeräts (PC_{B}, SV_{B}) unter Verwendung des Signalisierungsprotokolls der Voice-over-IP-Sitzung (SVIP);
wobei das Gateway **dadurch gekennzeichnet, dass** es enthält:
- Einrichtungen (11) zum Bestimmen mindestens eines vom fernen Endgerät (PC_{B}, SV_{B}) angebotenen Multimedia-Diensts abhängig von den Kapazitäten;
- Einrichtungen (11, 14) zum Liefern an mindestens ein Endgerät (PC_{A}, STB_{A}), mit dem es verbunden ist, der zum Aufbau einer Multimedia-Sitzung (SVID) mit dem fernen Endgerät (PC_{B}, SV_{B}) für den Zugriff auf den Multimedia-Dienst notwendigen Informationen, wenn die Kapazitäten dieses Endgeräts (PC_{A}, STB_{A}) es erlauben.

4. Computerprogramm, das Anweisungen zur Ausführung der Schritte des Verfahrens nach Anspruch 1 aufweist, wenn das Programm von einem Computer (GW_{A}) ausgeführt wird.

5. Verfahren, das von einem ersten privaten Gateway (GW_{A}) durchgeführt werden kann, um an mindestens ein mit einem zweiten privaten Gateway (GW_{B}) verbundenes fernes Endgerät (PC_{B}, SV_{B}) Informationen zu liefern, um eine Multimedia-Sitzung (SVID) mit einem mit dem ersten Gateway (GW_{A}) verbundenen lokalen Endgerät (PC_{A}, STB_{A}) aufzubauen, wobei die Gateways (GW_{A}, GW_{B}) über ein Telekommunikationsnetz (R) verbunden sind, wobei dieses Verfahren die folgenden Schritte aufweist:
- Aufbau (E30) einer Voice-over-IP-Sitzung (SVIP) zwischen einem mit dem ersten Gateway (GW_{A}) verbundene Endgerät (VIP_{A}) und einem mit dem zweiten Gateway (GW_{B}) verbundenen Endgerät (VIP_{B});
wobei das Verfahren **dadurch gekennzeichnet ist, dass** es auch die folgenden Schritte aufweist:
- Senden (E30), an das zweite Gateway (GW_{B}), von Kapazitäten des lokalen Endgeräts (PC_{A}, STB_{A}), die für einen Multimedia-Dienst repräsentativ sind, der vom lokalen Endgerät geliefert werden kann, unter Verwendung des Signalisierungsprotokolls der Voice-over-IP-Sitzung (SVIP);
- Konfiguration (E40) einer Firewall des ersten Gateways (GW_{A}), um den Aufbau einer Verbindung, die von einem mit dem zweiten Gateway (GW_{B}) verbundenen fernen Endgerät (PC_{B}, SV_{B}) initiiert wird, zum lokalen Endgerät (PC_{A}, STP_{A}) zu erlauben, wobei die Konfiguration Kapazitäten des fernen Endgeräts (PC_{B}, SV_{B}) berücksichtigt.

6. Verfahren nach Anspruch 5, **dadurch gekennzeichnet, dass** das erste Gateway (GW_{A}) den Kommunikationsport offen hält, so lange die Voice-over-IP-Sitzung (SVIP) oder mindestens eine der Multimedia-Sitzungen (SVID) aktiv ist.

7. Verfahren nach Anspruch 5, **dadurch gekennzeichnet, dass** das erste Gateway (GW_{A}) vom zweiten Gateway (GW_{B}) Kapazitäten mindestens eines mit dem zweiten Gateway (GW_{B}) verbundenen Endgeräts (PC_{B}, SV_{B}) empfängt, unter Verwendung des Signalisierungsprotokolls der Voice-over-IP-Sitzung (SVIP).

8. Privates Gateway (GW_{A}), das Einrichtungen (15) aufweist, um eine Voice-over-IP-Sitzung (SVIP) zwischen einem Endgerät (VIP_{A}), mit dem es verbunden ist, und einem Endgerät (VIP_{B}) aufzubauen, das mit einem zweiten Gateway (GW_{B}) verbunden ist, welches mit dem ersten Gateway (GW_{A}) über ein Telekommunikationsnetz (R) verbunden ist, wobei das Gateway (GW_{A}) **dadurch gekennzeichnet ist, dass** es aufweist:
- Einrichtungen (15), um an das zweite Gateway (GW_{B}) Kapazitäten eines mit dem ersten Gateway verbundenen lokalen Endgeräts (PC_{A}, STB_{A}) zu senden, wobei diese Kapazitäten für einen Multimedia-Dienst repräsentativ sind, der von dem lokalen Endgerät geliefert werden kann, unter Verwendung des Signalisierungsprotokolls der Voice-over-IP-Sitzung (SVIP);
- Einrichtungen (11), um eine Firewall des ersten Gateways (GW_{A}) zu konfigurieren, um den Aufbau einer von einem mit dem zweite Gateway (GW_{B}) verbundenen fernen Endgerät (PC_{B}, SV_{B}) initiierten Verbindung mit dem lokalen Endgerät (PC_{A}, STB_{A}) zu erlauben, wobei die Konfiguration Kapazitäten des fernen Endgeräts (PC_{B}, SV_{B}) berücksichtigt.

9. Computerprogramm, das Anweisungen zur Ausführung der Schritte des Verfahrens nach Anspruch 5 aufweist, wenn das Programm von einem Computer (GW_{A}) ausgeführt wird.

10. Kommunikationssystem, das es erlaubt, eine Multimedia-Sitzung zwischen zwei Endgeräten (STB_{A}, SV_{B}) aufzubauen, die je mit einem privaten Gateway (GW_{A}, GW_{B}) verbunden sind, wobei das Kommunikationssystem die privaten Gateways aufweist, wobei die privaten Gateways geeignet sind, um miteinander über ein Telekommunikationsnetz (R) verbunden zu werden, wobei die privaten Gateways geeignet sind, damit:
- mindestens ein erstes der Gateways (GW_{B}) dem zweiten der Gateways über das Signalisierungsprotokoll einer Voice-over-IP-Sitzung (SVIP), die zwischen mit diesen Gateways (GW_{A}, GW_{B}) verbundenen Endgeräten (VIP_{A}, VIP_{B}) aufgebaut ist, Kapazitäten mindestens eines mit dem ersten Gateway (GW_{B}) verbundenen ersten Endgeräts (SV_{B}) übermittelt;
wobei das Kommunikationssystem **dadurch gekennzeichnet ist, dass** die privaten Gateways ebenfalls geeignet sind, damit:
- das zweite Gateway (GW_{A}) mindestens einen vom ersten Endgerät (SV_{B}) angebotenen Multimedia-Dienst abhängig von den Kapazitäten bestimmt; und
- das zweite Gateway (GW_{A}) an mindestens ein zweites Endgerät (STB_{A}), mit dem es verbunden ist, Informationen liefert, die notwendig sind, um eine Multimedia-Sitzung (SVID) mit dem ersten Endgerät (SV_{B}) aufzubauen, um auf den Multimedia-Dienst zuzugreifen, wenn die Kapazitäten des zweiten Endgeräts (STB_{A}) es erlauben.
